(19) **Europäisches Patentamt**
**European Patent Office**
**Office européen des brevets**

(11) **EP 2 234 406 A1**

(12) **EUROPEAN PATENT APPLICATION**
published in accordance with Art. 153(4) EPC

(43) Date of publication:
**29.09.2010 Bulletin 2010/39**

(51) Int Cl.:
***H04N 13/00*** (2006.01)

(21) Application number: **08863033.0**

(22) Date of filing: **03.12.2008**

(86) International application number:
**PCT/CN2008/073310**

(87) International publication number:
**WO 2009/076853 (25.06.2009 Gazette 2009/26)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **03.12.2007 CN 200710187586**

(71) Applicant: **Huawei Technologies Co., Ltd.**
**Longgang District, Shenzhen**
**Guangdong 518129 (CN)**

(72) Inventors:
• **LIU, Yuan**
**Guangdong 518129 (CN)**
• **WANG, Jing**
**Guangdong 518129 (CN)**

(74) Representative: **Thun, Clemens**
**Mitscherlich & Partner**
**Patent- und Rechtsanwälte**
**Sonnenstrasse 33**
**80331 München (DE)**

(54) **A THREE DIMENSIONAL VIDEO COMMUNICATION TERMINAL, SYSTEM AND METHOD**

(57)  A 3D video communication terminal, system, and method are disclosed. The terminal includes a transmitting device, a receiving device, in which the transmitting device includes a camera and image processing unit, an encoding unit and a transmitting unit; the receiving device includes a receiving unit, a decoding unit, a restructuring unit, and a rendering unit. The 3D video communication system includes: a three dimensional video communication terminal, a 2D video communication terminal and a packet network. The 3D video communication method is processed in a two-way and three dimensional video communication, and it includes: shooting and acquiring video data; acquiring the depth and/or parallax information of short object from the video data; encoding the video data and the depth and/or parallax information; packing the encoded data into the packets according with the Real-time Transfer protocol; and transmitting the packets via the packet network. The two-way communication of the real-time remote video streams is realized.

FIG 3

**Description**

This application claims priority to Chinese Patent Application No. 200710187586.7, filed with the Chinese Patent Office on Dec. 3, 2007 and entitled "Three Dimensional Video Communication Terminal, System, and Method", which is hereby incorporated by reference in its entirety.

FIELD OF THE INVENTION

The present invention relates to the three dimensional (3D) field, and in particular, to a 3D video communication terminal, a system, and a method.

BACKGROUND

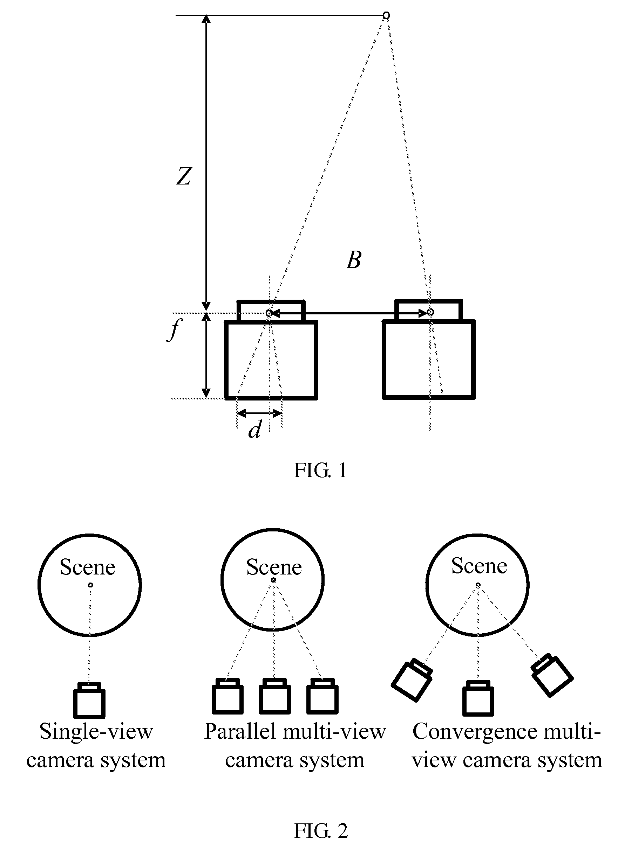

The 3D video technology, as a development trend in the video technology, helps provide pictures with the depth information in compliance with the 3D visual principle that accurately recreate the scene of the objective world and represent depth, hierarchy, and realism of the scene.
At present, the video research focuses on two areas: binocular 3D video and multi-view coding (MVC). As shown in FIG. 1, the fundamental principle of binocular 3D video simulates the principle of human eye aberration. With a bi-camera system, the images of left eye and right eye are obtained. The left eye sees the left eye channel image, while the right eye sees the right eye channel image. Finally, a 3D image is synthesized. An MVC is shot by at least three cameras and has multiple video channels. Different cameras shoot the MVC at different angles. FIG. 2 shows structures of a single-view camera system, a parallel multi-view camera system, and a convergence multi-view camera system using the video technology. When the MVC is played, scenes and images at different angles are transmitted to a user terminal, such as TV screen, so that a user can view images with different scenes at various angles.
With the MVC technology in the conventional art, a user can view dynamic scenes, perform interaction, such as freezing, slow play, and rewind, and change a viewing angle. A system using the technology adopts multiple cameras to capture the stored video stream and uses the multi-view 3D restructuring unit and interleaving technology to create hierarchical video frames, thus performing effective compression and interactive replay of dynamic scenes. The system includes a rendering and receiving device with a calculating device. The rendering program is used to render and receive interactive viewpoint images of each frame received by a receiving device at a viewing angle selected by the client.
Another interactive MVC technology in the conventional art is used in a new video capturing system. The system includes a video camera, a control personal computer (PC), a server, a network component, a client, and a video component for capturing relevant video. Multiple cameras work in master-slave mode. These cameras are controlled by one or more control PCs to synchronously collect data from multiple viewpoints and in different directions. The captured video data is compressed by the PC and transmitted to one or more servers for storage. The server distributes the compressed data to an end user or further compresses the data to remove the relevance of time domain and space domain.
During the creation of the present invention, the inventor finds at least the following problems in the existing MVC technology:

With the MVC technology, a single function is implemented without meeting the actual requirements of current consumers. For example, the MVC technology in the conventional art focuses on interactive replay of a stored dynamic scene. The multi-video technology in the existing technology focuses on storing the captured multi-video data on a server and then distributing the data to a terminal. No relevant system, method, or device supports the remote and real-time transmission of MVC and the play of bidirectional interactive 3D video in real time.

SUMMARY

Various embodiments of the present invention are directed to providing a 3D video communication terminal, a method, and a transmitting device are provided to perform remote real-time bidirectional communication of video data and MVC remote real-time broadcasting of MVC.
One embodiment of the present invention provides a 3D video communication terminal. The terminal includes a transmitting device and a receiving device.
The transmitting device includes: a camera and image processing unit, configured to shoot and output video data and its depth and/or parallax information; an encoding unit, configured to encode the video data output by the camera and image processing unit and the depth and/or parallax information; and a transmitting unit, configured to encapsulate the encoded data output by the encoding unit into a packet in compliance with a real-time transmission protocol, and transmit the packet over a packet network in real time.

The receiving device includes: a receiving unit, configured to receive a packet from a transmitting unit and remove the protocol header of the packet to acquire the encoded data; a decoding unit, configured to decode the encoded data output by the receiving unit to acquire the video data and the depth and/or parallax information; a restructuring unit, configured to restructure an image at a user's angle according to the depth and/or parallax information output by the decoding unit and the video data output by the decoding unit, and transmit the image data to the rendering unit; and a rendering unit, configured to render the data of a restructured image output by the restructuring unit to a 3D display device.

One embodiment of the present invention provides a 3D video communication system. The system includes: a 3D video communication terminal, configured to implement two dimensional (2D) or 3D video communication; a 2D video communication terminal, configured to implement 2D video communication; and a packet network, configured to carry 2D or 3D video data transmitted between 3D video communication terminals or between 2D video communication terminals.

One embodiment of the present invention provides a 3D video communication terminal. The terminal includes: a camera and image processing unit, configured to perform shooting and output video data and the depth and/or parallax information; an encoding unit, configured to encode the video data output by the camera and image processing unit and the depth and/or parallax information; and a transmitting unit, configured to encapsulate the encoded data output by the encoding unit into a packet in compliance with a real-time transmission protocol and transmit the packet over a packet network in real time.

One embodiment of the present invention provides another 3D video communication terminal. The terminal includes: a receiving unit, configured to receive a packet from a transmitting unit and remove the protocol header of the packet to acquire the encoded data; a decoding unit, configured to decode the encoded data output by the receiving unit to acquire the video data and depth and/or parallax information; a restructuring unit, configured to restructure an image at a user's angle according to the depth and/or parallax information output by the decoding unit and the video data output by the decoding unit, and transmit the image data to the rendering unit; and a rendering unit, configured to render the data of a restructured image output by the restructuring unit to a 3D display device.

One embodiment of the present invention provides a 3D video communication method. The method includes: performing bidirectional 3D video communication, such as shooting to acquire video data; acquiring the depth and/or parallax information of a shot object from video data; encoding the video data and depth and/or parallax information; encapsulating the encoded data into a packet by using a real-time transmission protocol; and transmitting the packet over a packet network.

One embodiment of the present invention provides another 3D video communication method. The method includes: receiving a video packet transmitted over a packet network in real time and removing the protocol header of the packet to acquire the encoded 3D video data; decoding the encoded video data to acquire video data and depth and/or parallax information; restructuring an image at a user's angle according to the depth and/or parallax information and the video data; and rendering the data of restructured image to a 3D display device.

The preceding technical solutions show that a 3D video communication terminal can use a receiving device to receive 3D video stream in real time and render the stream, or transmit 3D video data to the opposite terminal over a packet network in real time. Therefore, a user can view a real-time 3D image remotely to realize remote 3D video communication and improve the user experience.

## BRIEF DESCRIPTION OF THE DRAWINGS

FIG. 1 is a principle diagram of binocular 3D video shooting with the conventional art;

FIG. 2 shows structures of a single-view camera system, a parallel multi-view camera system, and a convergence multi-view camera system using conventional art;

FIG. 3 is a principle diagram of a 3D video communication terminal according to one embodiment of the present invention;

FIG. 4 is a principle diagram of a 3D video communication system according to one embodiment of the present invention;

FIG. 5 is a principle diagram of a transmitting end, a receiving end and devices on both sides of a packet network shown in FIG. 4;

FIG. 6 is a principle diagram of a 3D video communication system according to one embodiment of the present invention;

FIG. 7 is a flowchart of mixed encoding and decoding of video data on a transmitting device and a receiving device;

FIG. 8 shows the relationship between parallax, depth, and user's viewing distance;

FIG. 9 is a flowchart of a 3D video communication method of a transmitter according to one embodiment of the present invention; and

FIG. 10 is a flowchart of a 3D video communication method of a receiver according to one embodiment of the present invention.

DETAILED DESCRIPTION

The following parts take embodiments by referring to figures to describe the purpose, technical solution, and advantages of the present invention in detail.

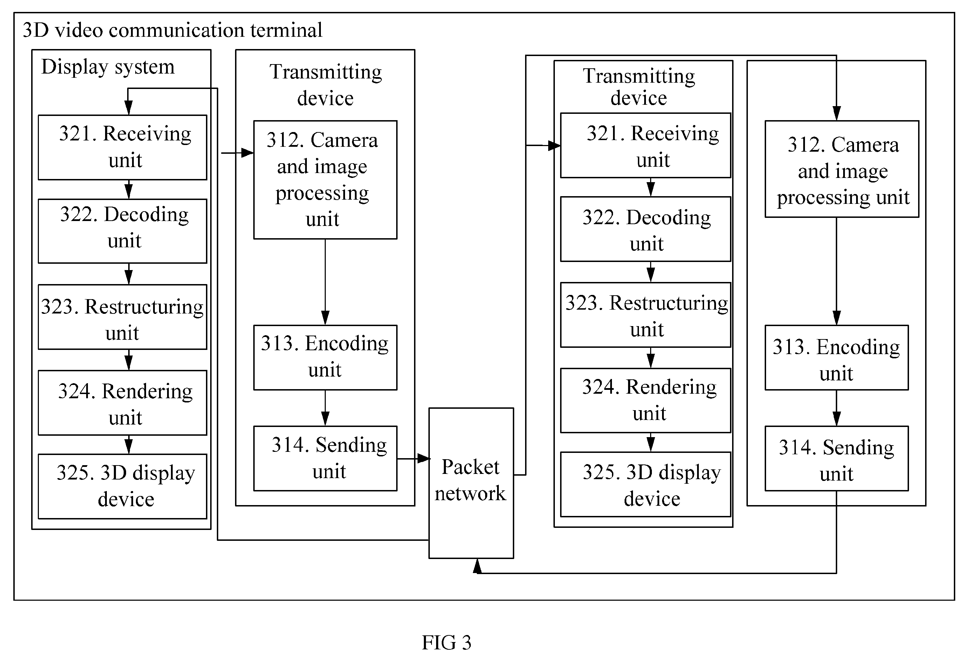

FIG. 3 shows an embodiment of the present invention. A bidirectional real-time 3D video communication terminal supporting multiple views is provided in the embodiment. Both communication parties can view stable real-time 3D video images at multiple angles when using the terminal.

A 3D video communication terminal is provided in the first embodiment. The terminal includes a transmitting device, a packet network, and a receiving device.

The transmitting device includes: a camera and image processing unit 312, configured to perform shooting and output video data and depth and/or parallax information; an encoding unit 313, configured to encode the video data output by the camera and image processing unit 312 and depth and/or parallax information; and a transmitting unit 314, configuyred to encapsulate the encoded data output by the encoding unit 313 into a packet in compliance with a real-time transmission protocol and transmit the packet over a packet network in real time.

The receiving device includes: a receiving unit 321, configured to receive a packet from the transmitting unit 314 and remove the protocol header of the packet to acquire the encoded data; a decoding unit 322, configured to decode the encoded data output by the receiving unit 321 to acquire the video data and depth and/or parallax information; a restructuring unit 323, configured to restructure the image at a user's angle based on the depth and/or parallax information output by the decoding unit 322 and the video data output by the decoding unit 322, and transmit the image data to the rendering unit 324; and a rendering unit 324, configured to render the decoded data output by the decoding unit 322 or the restructured image output by the restructuring unit 323 onto a 3D display device.

To implement the bidirectional communication function, one side of the transmitting device can further include the receiving device, and one side of the receiving device can further include the transmitting device.

The camera and image processing unit 312 can be a multi-view camera and image processing unit. The transmitting device and receiving device are treated as a whole or used respectively. In the embodiment, the remote real-time bidirectional communication of 3D video data is performed in the on-site broadcasting or entertainment scenes.

The preceding sections show that, after the transmitting unit 314 sends the video data shot by the camera and image processing unit 312 and the video data is transmitted over a packet network in real time, the receiving unit at the receiving end can receive the video data in real time and then restructure or render the video data as required. In this way, a user can see a 3D image remotely in real time to implement remote 3D video communication and improve the user experience.

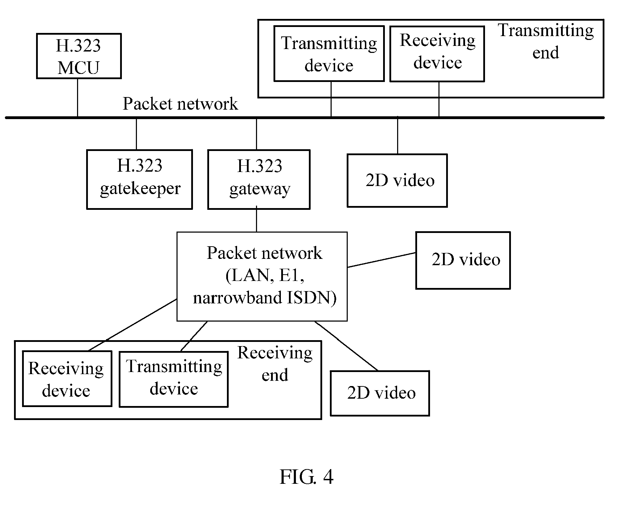

FIG. 4 shows an embodiment of the 3D video communication system for networking based on the H.323 protocol. In the embodiment of the present invention, the 3D video communication system includes a transmitting end, a packet network, and a receiving end in the first embodiment.

Video data can be transmitted over the packet network in real time.

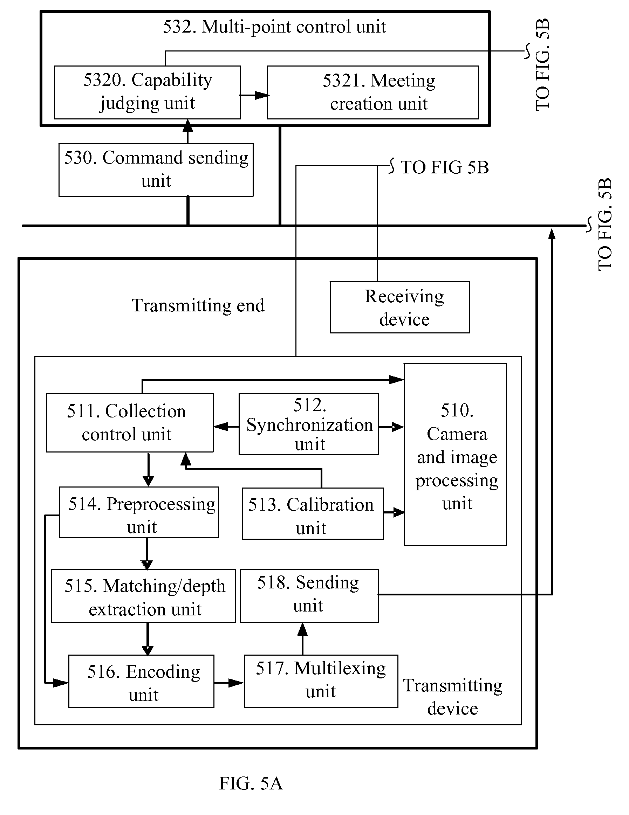

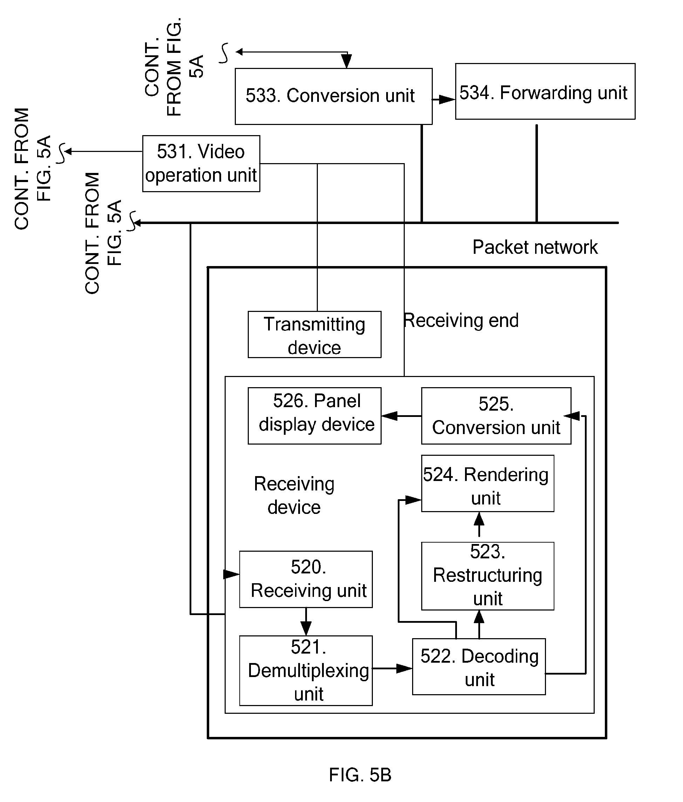

As shown in FIG. 5, the transmitting end includes a transmitting device and a receiving device.

The transmitting device includes:

a camera and image processing unit 510, configured to perform shooting and output video data, where the camera and image processing unit 510 can be a unit supporting the single-view, multi-view, or both the single-view and multi-view modes;

a collection control unit 511, configured to follow the commands to control the operation of the camera and image processing unit 510, for example, follow the commands sent by the video operation unit 531 to control the operation of the camera and image processing unit;

a synchronization unit 512, configured to generate synchronous signals and transmit the signals to the camera and image processing unit 510 to control synchronous collection; or transmit the signals to the collection control unit 511 and notify the unit 511 of controlling the synchronous collection by the camera and image processing unit 510;

a calibration unit 513, configured to acquire the internal and external parameters of a camera in the camera and image processing unit 510, and transmit a correction command to the collection control unit 511;

a preprocessing unit 514, configured to receive the video data output by the collection control unit 511 and relevant camera parameters, and preprocess the video data according to a preprocessing algorithm;

a matching/depth extraction unit 515, configured to acquire the 3D information of a shot object from the video data output by the preprocessing unit 514, and transmit the 3D information and video data to the encoding unit 516;

an encoding unit 516, configured to encode the video data output by the preprocessing unit 514 and the depth and/or parallax information output by the matching/depth extraction unit 515;

a multiplexing unit 517, configured to multiplex the encoded data output by the encoding unit 516; and
a transmitting unit 518, configured to encapsulate the encoded data output by the multiplexing unit 517 into a packet in compliance with a real-time transmission protocol, and transmit the packet over a packet network in real time.

The receiving end includes a transmitting device and a receiving device. The receiving device includes:

a receiving unit 520, configured to receive a packet from the transmitting unit 518 and remove the protocol header of the packet to acquire the encoded data;
a demultiplexing unit 521, configured to demultiplex the data received by the receiving unit 520;
a decoding unit 522, configured to decode the encoded data output by the demultiplexing unit 521;
a restructuring unit 523, configured to restructure an image based on the decoded data output by the decoding unit 522 and processed with the 3D matching technology, and transmit the image data to the rendering unit 524; and
a rendering unit 524, configured to render the data output by the decoding unit 522 or the restructuring unit 523 onto a 3D display device.

In other embodiments, the receiving device further includes:

a conversion unit 525, configured to convert the 3D video data output by the decoding unit 522 to the 2D video data; and
a panel display device 526, configured to display the 2D video data output by the conversion unit 522.

The communication terminals on both sides of the packet network are configured to perform communication and control the transmitting device and 3D receiving device. The terminal includes:

a command sending unit 530, configured to send commands, such as a meeting originating command with the capability information of the camera and image processing unit 510, and send a transmitting device control command from the collection control unit 511 to the opposite party through the transmitting unit 518, such as a command to control a specific camera switch in the camera and image processing unit 510 or perform shooting at a specific angle;
a video operation unit 531, configured to operate the transmitting device and the receiving device, for example, to turn on the transmitting device and the receiving device after receiving a meeting confirmation message;
a multi-point control unit (MCU) 532, connected to a packet network, and configured to control the multi-point meeting connection and including:

a capability judging unit 5320, configured to judge whether both sides of a meeting have 3D shooting and 3D display capabilities according to the capability information carried by the command when receiving a meeting originating command from the communication terminal. In other embodiments, the function can also be integrated into a terminal. That is, no MCU is used to judge the capabilities of both or multiple sides of a meeting, and the terminal makes judgment by itself; and
a meeting establishment unit 5321, configured to establish a meeting connection between communication terminals of both sides of the meeting over the packet network when the capability judging unit 5320 determines that both sides have 3D shooting and 3D display capabilities. For example, the unit 5321 transmits the meeting confirmation message to the video operation unit 531 of communication terminals of both sides to turn on the transmitting device and the receiving device, and transmits the address of communication terminal of the receiver to the transmitting unit 518 on the transmitting device of the sender;
a conversion unit 533, configured to convert data formats. For example, the unit 533 converts the video data received by the transmitting unit 518 on the transmitting device of one side into 2D video data; and
a forwarding unit 534, configured to transmit the video data output by the conversion unit 533 to the receiving unit 520 on the transmitting device 520 of the opposite side.

When the capability judging unit 5320 in the MCU system obtains the result that one of both sides of a meeting is incapable of 3D display, the conversion unit 533 starts working. The communication terminal also has the capability judgment function.

In the embodiment, the video communication system networking is performed on the basis of the H.323 protocol. The video communication system is established on a packet network, such as a local area network (LAN), E1, narrowband integrated service digital network (ISDN) or wideband ISDN. The system includes an H.323 gatekeeper, an H.323 gateway, an H.323 MCU, a common 2D camera device, and a camera and image processing unit.

The gatekeeper as an H.323 entity on the network provides address translation and network access control for the H.323 communication terminal, gateway, and MCU. The gatekeeper also provides other services, such as bandwidth management and gateway location, for the communication terminal, gateway, and MCU.

The H.323 gateway provides bidirectional real-time communication for an H.323 communication terminal on a packet network, other ITU terminals on a packet switching network, or another H.323 gateway.

The H.323 MCU, as mentioned earlier, configured to control meeting connection. The unit as an endpoint on a network serves three or more terminals and gateways to attend a multi-point meeting or is connected to two communication terminals to hold a point-to-point meeting and then extend to a multi-point meeting. The MCU is composed of a necessary multipoint controller (MC) and an optional multipoint processor (MP). The MC offers the control function for a multipoint meeting, performs capability negotiation with a communication terminal, and controls meeting resources. The MP controlled by the MC mixes and switches the audio, video, and/or data stream on a multipoint meeting in an integrated mode.

The 2D camera device can be a 2D video communication terminal or a video communication terminal with only the 2D image collection and display capabilities, such as a video phone, a videoconferencing terminal, and a PC video communication terminal.

The preceding embodiment shows that, compared with an existing H.323 video communication network, the MCU in the embodiment of the present invention is improved on the basis of a multi-view 3D communication system, and controls a meeting between a multi-view 3D communication system and a common 2D video communication system and processes the 3D video stream.

It is understandable that, in addition to the H.323 protocol, the protocols provided in embodiments of the present invention in compliance with real-time transmission also include the H.261 protocol, H.263 protocol, H.264 protocol, Session Initiation Protocol (SIP), Real time Transport Protocol (RTP), and Real Time Streaming Protocol (RTSP). These protocols are not used to confine the present invention.

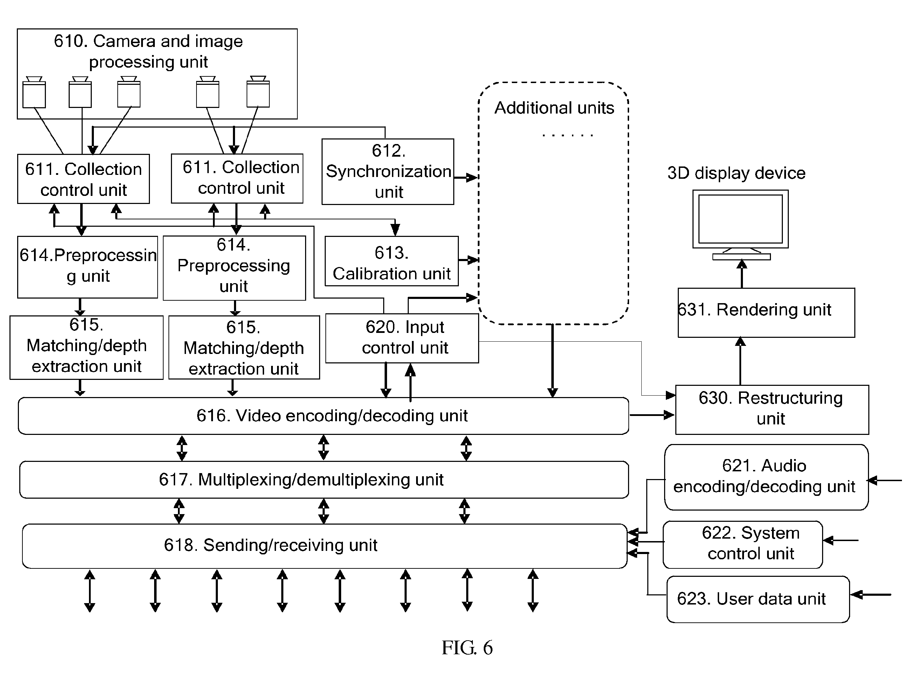

FIG. 6 shows another embodiment of a 3D video communication system. The camera and image processing unit 610, collection control unit 611, synchronization unit 612, and calibration unit 613 constitute the video collection part of the multi-view 3D video communication system. The camera and image processing unit can be one of the following:

a 3D camera and image processing unit, configured to transmit the video data of depth and/or parallax information; or a camera and a matching/depth extraction unit which are separated. The camera is configured to perform shooting and output video data.

The matching/depth extraction unit is configured to acquire the depth and/or parallax information of a shot object from the video data output by the camera and transmit the information.

The cameras in the camera and image processing unit 610 are grouped, and the number of cameras in each group N is equal to or larger than 1. Cameras are laid out in a parallel multi-view camera or ring multi-view camera mode and are used to shoot a scene from different viewpoints. The collection control unit 611 controls the grouping of cameras. A camera is connected to the collection control unit 611 through a CameraLink, an IEEE 1394 cable, or a coaxial cable for transmission of video stream. In addition, the camera is also connected to a command sending unit through a remote control data line, so that a user can remotely shift and rotate the camera, and zoom the camera in and out. In the camera and image processing unit 610, the number of camera groups M is equal to or larger than 1, which can be set according to the requirement of an actual application scenario. In FIG. 6, two groups of parallel multi-view cameras are used to transmit video streams.

The synchronization unit 612, as mentioned earlier, is configured to control synchronous collection of video streams among cameras. The synchronization unit 612 can avoid the image of a high-speed moving object shot by the multi-view camera and image processing unit 610 from resulting in differences, because the image shot at a high speed differs greatly from each viewpoint or is seen differently by left and right eyes on a same viewpoint at the same time. In this case, a user sees distorted 3D video. The synchronization unit 612 generates synchronous signals through a hardware or software clock, and transmits the signals to an external synchronization interface of a camera to control synchronous collection of the camera. Or, the synchronization unit 612 transmits the signals to the collection control unit 611, and then the collection control unit 611 controls synchronous collection of the camera through a control cable. The synchronization unit 612 can also use the video output signals of a camera as control signals and transmit the signals to another camera for synchronous collection control. Synchronization collection requires frame synchronization or horizontal and vertical synchronization.

The calibration unit 613, as mentioned earlier, is configured to calibrate multiple cameras. In a 3D video system, the depth or parallax information of a scene is required for 3D matching and scene restructuring on the basis of shooting relationship of a point in a project between the coordinates in the world-space coordinate system and shooting point coordinates. The internal parameters such as image center, focus, and lens distortion and external parameters of a camera are crucial to the decision of the shooting relationship. These parameters are unknown, partially unknown, or uncertain in principle. Therefore, it is necessary to acquire the internal and external parameters of a camera in a certain way. The process is called camera calibration. During the collection of 3D video by a camera, the ideal shooting equation at a point without consideration of distortion can be expressed according to the affine transformation principles as follows:

$$\begin{bmatrix} u \\ v \\ 1 \end{bmatrix} = \mathbf{K}\begin{bmatrix} \mathbf{R} & \mathbf{t} \end{bmatrix}\begin{bmatrix} X_w \\ Y_w \\ Z_w \end{bmatrix} \qquad \mathbf{K} = \begin{bmatrix} fs & 0 & u_0 \\ 0 & f & v_0 \\ 0 & 0 & 1 \end{bmatrix}$$

where, $u,v$ represents the shooting point coordinates; $X_wY_wZ_w$ represents world-space coordinates; s represents a scale factor of an image, indicating the ratio of the number of image horizontal unit pixels $f_u$ to the number of vertical unit pixels $f_v$; $f$ represents the focus; $u_0,v_0$ represents the image center coordinates; R represents the rotation matrix of a camera; t represents the shifting vector of a camera; K represents an internal parameter of a camera; and R and t represent external parameters of a camera. For a parallel bi-camera system, the equation is expressed as follows:

$$d_x(m_l, m_r) = \begin{cases} \dfrac{x_l}{X_l} = \dfrac{f}{Z} \\ \dfrac{x_r}{X_r} = \dfrac{f}{Z} \end{cases} \Rightarrow x_l - x_r = \dfrac{f}{Z}(X_l - X_r) = \dfrac{fB}{Z}$$

where, f represents the focus; Z represents the distance from a point to the shooting plane; B represents the space between optical centers of two cameras; and d represents the parallax. We can see that the focus f influences the depth Z greatly. In addition, some internal parameters such as image center and distortion coefficient also influence the calculation of depth and/or parallax. These parameters are required for image correction.

In the embodiment, a camera can be calibrated in many ways, such as a traditional calibration method and self-calibration method. The traditional calibration methods include the direct linear transformation (DLT) calibration method brought forward in 1970s and the calibration method based on radial alignment constraint (RAC). In the basic method, a system of linear equation of camera shooting model is set up, the world-space coordinates of a set of points in a scenario and the corresponding coordinates on a shooting plane are measured, and then these coordinate values are introduced into the system of linear equation to get internal and external parameters. Self-calibration refers to the process to calibrate a camera based on the correspondence between image points without calibration blocks, and is based on the special constrained relationship such as polar constraint between shooting points in many images. Therefore, the structure information of a scenario is not required. The self-calibration method has flexible and convenient advantages.

In the implementation method of the present invention, the calibration unit 613 functions to calibrate multiple cameras and get the internal and external parameters of each camera. Different calibration algorithms are used in various application scenarios. For example, in a videoconferencing scenario, the calibration unit 613 uses an improved traditional calibration method for calibration to simplify the complicated handling process of a traditional calibration method, improve the precision, and shorten calibration time compared with the self-calibration method. The basic idea is that an object which permanently exists and is melt into a shooting scene is provided or found as a reference, such as the nameplate of a user in the videoconferencing scenario and a cup in the scenario. These objects provide physical dimensions and rich characteristics that can be extracted, such as the edge, word, or design of a nameplate, and the concentric circle feature of a cup. A relevant algorithm is used for calibration. For example, a plane calibration method for calibration includes: providing a plane calibration reference with the known physical size; performing shooting to acquire the image of a plane calibration reference at different angles; automatically matching and detecting the characteristics of the image of a plane calibration reference, such as the characteristics of word and design; getting internal and external parameters of a camera according to the plane calibration algorithm; and getting a distortion coefficient for optimization.

To avoid the great difference of parameters of different cameras, such as the focuses and external parameters of cameras, the internal and external parameters of these parameters are provided as feedback information in many embodiments of the present invention to a collection control unit. The collection control unit adjusts cameras based on the difference of current parameters, so that the difference is reduced to an acceptable level in the iteration process.

The collection control unit 611, as mentioned earlier, is configured to control a group of cameras to collect and transmit video images. The number of groups of cameras is set according to a scene to meet certain requirements. When one group of cameras is set, the collection control unit transmits 2D video streams. When two groups of cameras are set, the collection control unit transmits binocular 3D video streams. When over two groups of cameras are set, the collection control unit transmits MVC streams. For an analog camera, the collection control unit switches analog image signals into a digital video image. The image is saved in the format of frames in the cache of the collection control unit. In addition, the collection control unit 611 provides a collected image to the calibration unit 613 for calibration of a camera.

The calibration unit 613 returns internal and external parameters of the camera to the collection control unit 611. The collection control unit 611 establishes the correspondence between video streams and collected attributes of the camera based on these parameters. These attributes include the unique sequence No. of a camera, internal and external parameters of the camera, and the time stamp to collect each frame. These attributes and video streams are transmitted in a certain format. Besides the foregoing functions, the collection control unit 611 also provides the function of controlling a camera and synchronously collecting an image. The collection control unit 611 can shift, rotate, zoom in, and zoom out the camera through a remote control interface of the camera according to the calibrated parameters. This unit can also provide synchronous clock signals to the camera through a synchronous interface of the camera for collecting synchronous collection. In addition, the collection control unit 611 can also be controlled by the input control unit 620. For example, the unnecessary video collection of the camera is closed according to the viewpoint information selected by a user.

The preprocessing unit 614, as mentioned earlier, is configured to preprocess the collected video data. Specially, the preprocessing unit 614 receives the collected image cache and relevant camera parameters from the collection control unit 611 and processes the cached image according to a preprocessing algorithm. The preprocessed contents include: removing noise of an image; eliminating the image difference by different cameras, for example, adjusting the difference of chrominance and luminance of images caused by the settings of different cameras; correcting an image according to the distortion coefficient in parameters of the camera, such as radial distortion correction; and/or aligning scanning lines for the 3D matching algorithm, such as dynamic programming, based on the matching of scanning lines. In a preprocessed image, the image noise caused during most collection processes and undesired inconsistency between images caused by the difference of cameras are eliminated to help extracting subsequent 3D matching and depth/parallax.

The matching/depth extraction unit 615, as mentioned earlier, is configured to acquire the 3D information of a shooting object from the video data output by the preprocessing unit 614 and transmit the 3D information and video data to the video encoding/decoding unit 616. 3D image matching is a crucial technology in 3D video. The restructuring of 3D video requires the 3D information of a shooting object. The crucial depth information must be acquired from multiple images. To acquire the depth information, the shooting points are firstly found in multiple images corresponding to a point in a scene, and the coordinate of the point in space according to the coordinate of the point in multiple images is obtained to acquire the depth information of the point. With the image matching technology, the shooting points in different images corresponding to a point in a scene are found.

The 3D matching technologies available according to one embodimentdf of the present invention includes the window-based matching, characteristics-based matching, and dynamic planning method. The window-based matching and dynamic planning method use a grey-based matching algorithm. The basic idea of the grey-based algorithm is that an image is split into small sub-areas, and based on the grey value of these small sub-areas as a template, small sub-areas whose grey value is most similar to the preceding value are found from another image. If both sub-areas meet the similarity requirements, points in these sub-areas match with each other. In the process of matching, relevant functions can be used to check the similarity of both sub-areas. Generally, in the process of grey-based matching, the dense depth diagram of an image is acquired. In the process of characteristics-based matching, the characteristics of an image that are exported on the basis of the grey information of the image are used instead of the grey of the image for matching to achieve better stability. Matching characteristics can be served as potential important characteristics of 3D structure in a scene, such as an edge and an intersection point (corner point) of edge. In the process of characteristics-based matching, generally a sparse depth information diagram is acquired, and then a dense depth information diagram of an image is acquired with the method of interpolative value.

The matching/depth extraction unit 615 is configured to match video images collected by two adjacent cameras and acquire the parallax/depth information by calculation. The matching/depth extraction unit 615 restricts the maximum parallax of images shot by two adjacent cameras. If the maximum parallax is exceeded, the efficiency of matching algorithm is so low that the parallax/depth information with high precision cannot be acquired. The maximum parallax can be set by the system in advance. In an embodiment of the present invention, the matching algorithm used by the matching/depth extraction unit 615 is selected from multiple matching algorithms such as window matching and dynamic planning method and is set according to the actual application scenario. After the matching operation, the matching/depth extraction unit 615 gets the depth information in a scene according to the image parallax and parameters of a camera. The following section gives an example of grey-based window matching algorithm.

Suppose that $f_L(x,y)$ and $f_R(x,y)$ are two images shot by the left and right cameras, and $(x_L,y_L)$ s a point in $f_L(x,y)$. Take $(x_L,y_L)$ as the center to form a template T, whose size is m x n. If the template is shifted in $f_R(x,y)$ at a distance of $\Delta x$ horizontally and $\Delta y$ vertically, and the template covers the k area $S_k$ in $f_R(x,y)$, the dependency of $S_k$ and T can be measured by relevant functions:

$$D(S_k, T) = \sum_{i=1}^{m}\sum_{j=1}^{n}[S_k(i,j) - T(i,j)]^2 = \sum_{i=1}^{m}\sum_{j=1}^{n}[S_k(i,j)]^2 - 2\sum_{i=1}^{m}\sum_{j=1}^{n}S_k(i,j)T(i,j) + \sum_{i=1}^{m}\sum_{j=1}^{n}[T(i,j)]^2$$

When $D(S_k,T)$ is minimal, the best matching is achieved. If $S_k$ and T are the same, $D(S_k,T)=0$

In the preceding formula, $\sum_{i=1}^{m}\sum_{j=1}^{n}[T(i,j)]^2$ represents the energy of template T and is a m n constant.

$\sum_{i=1}^{m}\sum_{j=1}^{n}[S_k(i,j)]^2$ represents the energy in $S_k$ area and varies with the template T. If T changes in a small range,

$\sum_{i=1}^{m}\sum_{j=1}^{n}[S_k(i,j)]^2$ is approximate to a constant. To minimize $D(S_k,T)$, $\sum_{i=1}^{m}\sum_{j=1}^{n}S_k(i,j)T(i,j)$ is maximized. The

normalized cross correlation (NCC) algorithm is used to eliminate mismatching caused by brightness difference. The relevant functions can be expressed as follows:

$$C(\Delta x, \Delta y) = \frac{\sum_{i=1}^{m}\sum_{j=1}^{n}|S_k(i,j) - E(S_k)||T(i,j) - E(T)|}{\sqrt{\sum_{i=1}^{m}\sum_{j=1}^{n}[S_k(i,j) - E(S_k)]^2}\sqrt{\sum_{i=1}^{m}\sum_{j=1}^{n}[T(i,j) - E(T)]^2}}$$

where, $E(S_k)$ and $E(T)$ represent the average grey values of $S_k$ and T respectively. When $C(\Delta x, \Delta y)$ is maximal, $D(S_k,T)$ is minimal. $(x_L,y_L)$ can be considered as matching the point $(x_L+\Delta x, y_L+\Delta y)$. $\Delta x, \Delta y$ respectively represent the horizontal parallax and the vertical parallax between two images. For the preceding parallax camera system, the vertical parallax is close to 0, the horizontal parallax is expressed as $\Delta x = \frac{fB}{Z}$. In this case, the depth information of a point in a scene can be expressed as $Z = \frac{fB}{\Delta x}$.

In another embodiment, the matching/depth extraction unit 615 can optimize the matching algorithm, for example, through parallax calculation to ensure the real-time performance of the system.
The video encoding/decoding unit 616, as mentioned earlier, is configured to encode and decode the video data. The unit 616 includes a video encoding unit and a video decoding unit. In an embodiment of the present invention, 3D video codes are classified into block-based codes and object-based codes. In the 3D image codes, the data redundancy in airspace and time domain is eliminated through intra-frame prediction and inter-frame prediction, and the airspace data redundancy can also be eliminated between multi-channel images. For example, the time domain redundancy between multi-channel images is eliminated through parallax estimation and compensation. The core of parallax estimation and compensation is to find the dependency between two or more images. The parallax estimation and compensation is similar to the motion estimation and compensation.
The video encoding and decoding unit described in an embodiment of the present invention encodes and decodes the MVC data in one of the following modes:

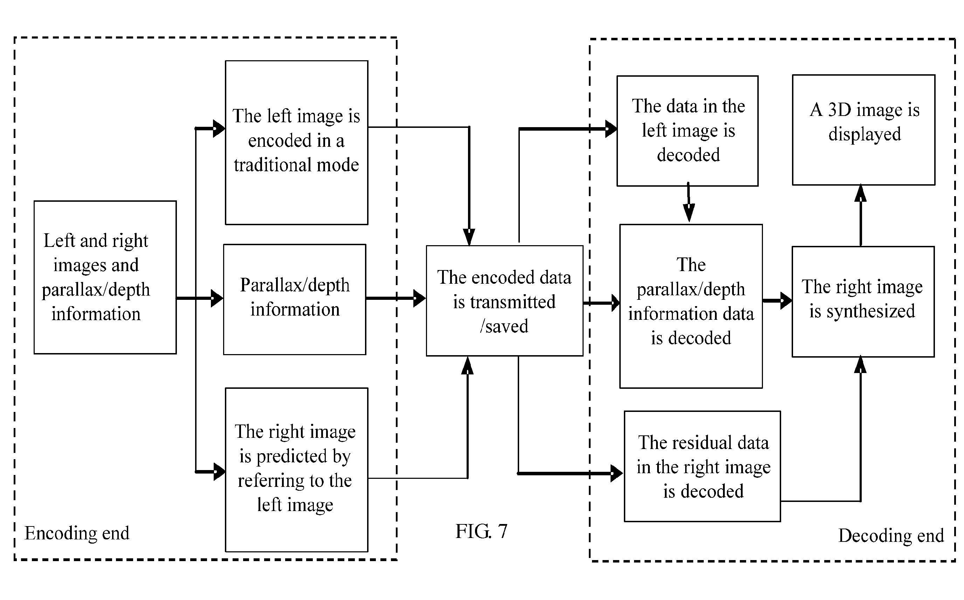

1) When the parallax of an image between different viewpoints is smaller than and equal to the set maximum parallax, the data is encoded in a mixed mode of frame of one frame + parallax/depth value + partial residual. The parallax/depth value uses the MPEG Part 3: Auxiliary video data representation standard. FIG. 7 shows a basic process instance of implementing a mixed encoding scheme for binocular 3D video. In FIG. 7, the encoding end acquires the left and right images and their parallax/depth information. The left image and its parallax/depth information are encoded in a traditional mode. The right image can be predicted and encoded by referring to the encoding mode of the left image, and then the encoded data is transmitted to the decoding end. The decoding end decodes the data in the left image, the parallax/depth information, and the residual data in the right image, and combines the preceding data into a 3D image.

2) When the parallax of images between different viewpoints is larger than the set maximum parallax, the video streams are encoded separately in a traditional mode, such as the H.263 and H.264 encoding and decoding standard. The mixed encoding and decoding scheme makes fully use of the dependency between adjacent images to achieve high compression efficiency, reduce much time domain and airspace data redundancy between adjacent images. In addition, the parallax/depth codes help the restructure of an image. If an area in an image is sheltered and the parallax/depth data fails to be extracted, the residual codes are used to perfect the quality of the restructured image. If the parallax of an image between different viewpoints, the video streams at different viewpoints are encoded separately in a traditional motion estimation and compensation mode, such as the MVC encoding standard stipulated by the MPEG organization. In addition, the encoding and decoding unit described in the present invention also supports the scalability video coding (SVC) standard, so that the system is better applicable to different network conditions.

Furthermore, the video encoding and decoding unit receives data from a backward channel of the input control unit 620 and controls the encoding and decoding operation according to a user's information. The basic control includes:

finding the video streams according to a viewpoint selected by a user for encoding, and not encoding the video streams at the viewpoint which is not watched by the user to effectively save the processing power of the video encoding and decoding unit; and

encoding and decoding the video streams according to the display capability of a user's terminal. For a terminal with only 2D display capability, a route of 2D video streams is encoded and sent. In this way, the compatibility between a multi-view 3D video communication system and a common video communication system is improved, and less unnecessary data is transmitted.

The multiplexing/demultiplexing unit 617, as mentioned earlier, includes a multiplexing unit and a demultiplexing unit. The multiplexing unit receives the encoded video streams from a video encoding and decoding unit and multiplexes multiple routes of video streams by frames/fields. If video streams are multiplexed by fields, one video stream is encoded in the odd field, and the other video stream is encoded in the even field. The video stream in the odd/even field is transmitted as a frame. The demultiplexing unit receives packet data from a receiving unit for demultiplexing and restores multiple routes of encoded video streams.

The sending/receiving unit 618, as mentioned earlier, includes a sending unit and a receiving unit. The sending/ receiving unit 618 is called network transmission unit. The sending unit of the sender receives the multiplexed data streams from a multiplexing unit, packets the data streams, encapsulates the data streams into a packet in compliance with the RTP, and then sends out the data streams through a network interface, such as an Ethernet interface or ISDN interface. In addition, the sending unit of the sender also receives the encoded video data streams from the audio encoding/decoding unit 621, receives the signaling data stream from the system control unit 622, and receives the user data, such as transmitted file data, from the user data unit 623. The data is packed and sent to a receiving end through a network interface. After the receiving unit at the receiving end receives the packet data from the transmitting end, the protocol header is removed, the effective user data is reserved, and then the data is sent to the demultiplexing unit, the audio decoding unit, the system control unit 622, and the user data unit 623 according to the data type. Furthermore, for a media type, the suitable logic framing, sequence numbering, error detection, and error correction are performed.

The restructuring unit 630 is configured to restructure the decoded data output by the decoding unit and then transmit the data to the rendering unit. The functions of the restructuring unit 630 include:

solving the problem of a user failing to see a video image at a viewpoint where no camera is placed. Because not all viewpoints are covered due to the limited number of cameras, a user may need to view the scene at a viewpoint where no camera is placed. The restructuring unit 630 can obtain the viewpoint information to be viewed by a user from the input control unit 620. If the user selects an existing viewpoint of a camera, the restructuring unit 630 does not restructure an image. If the user selects a viewpoint between two adjacent groups of cameras or two neighboring cameras in a group without analog view angle, the restructuring unit 630 restructures the image at a viewpoint selected by the user according to the images shot by neighboring cameras. Based on the parallax/depth information at a shooting viewpoint of a camera, the location parameter information of adjacent camera, and the imaging point coordinate at an analog viewing angle in a scene which is determined according to the projection equation, the video image at the analog view angle is restructured; and

solving the problem of a user viewing a 3D image which varies with the parallax due to changed location through 3D display. Automatic 3D display enables a user without wearing glasses to view a 3D image. By this time, however, the distance from the user to the automatic 3D display may be changed, resulting in the parallax of the image changes.

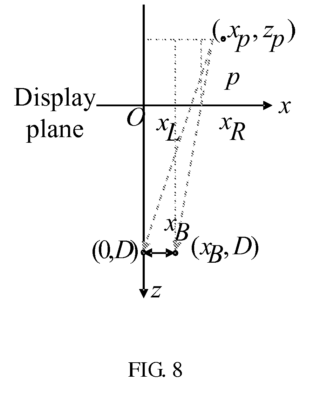

It is necessary to describe the relationship between parallax, depth, and viewing distance of a user. FIG. 8 shows the relationship between the image parallax p, object depth $z_p$, and the distance D from a user to a display in the parallax camera system. Based on a simple geometrical relationship, the following formula is acquired:

$$\begin{cases} \dfrac{x_L}{D} = \dfrac{x_p}{D - z_p} \\ \dfrac{x_R - x_B}{D} = \dfrac{x_p - x_B}{D - z_p} \end{cases} \Rightarrow \dfrac{x_L - x_R + x_B}{D} = \dfrac{x_B}{D - z_p} \Rightarrow \left| x_L - x_R \right| = x_B \left( 1 - \dfrac{D}{D - z_p} \right) = x_B \left( \dfrac{1}{\dfrac{z_p}{D} - 1} + 1 \right) = p$$

The preceding formula shows that the parallax p of the image depends on the distance D from the user to a display. A 3D video image received at the 3D video receiving end usually has the fixed parallax which can be served as a reference parallax $p_{ref}$. When D changes, the restructuring unit adjusts the parallax $p_{ref}$ to generate a new parallax $p'$ and then regenerates another image based on the new parallax. In this case, a suitable image can be viewed when the distance from the user to the display surface changes. The distance from the user to the display surface can be automatically detected through a camera after a depth chart is acquired, or be controlled manually through the input control unit 620.

The input control unit 620 is configured to receive the input data from a communication terminal and then feed back the data to the collection control unit 611, the encoding unit, and the restructuring unit 630 for controlling the encoding and restructure of multiple video streams. The input control unit 620 includes the information about the viewpoint and the information about the distance between a display and a user. An end user can enter the information, such as the viewpoint, distance, and display mode, about the input control unit 620 through a graphical user interface (GUI) or remote control device. Or a terminal detects the relevant information by itself, such as the display capability information of the terminal.

The rendering unit 631, as mentioned earlier, receives the video data steam from the restructuring unit 630 and renders a video image to a display device. The multi-view 3D video communication system described in the present invention supports multiple display terminals, including a common 2D video display device, an automatic 3D display device, a pair of 3D glasses, and a holographic display device.

In addition, in other embodiments, the system further includes:

an audio encoding/decoding unit 621 (G.711 and G.729), configured to encode the audio signals from a microphone at the communication terminal for transmission and decode the audio codes which are received from the receiving unit and transmit the audio data to a speaker;
a user data unit 623, configured to support the remote information processing application, such as electronic whiteboard, static image transmission, documents exchange, database access, and audio graphic meeting; and
a system control unit 622, configured to provide signaling for correct operation of a terminal. The unit provides call control, capability exchange, commands and indicated signaling, and messages.

In the network structure, when initiating a video communication session, a party first performs capability negotiation with the peer end through an MCU or by itself. If both parties use multi-view 3D video communication systems, these parties can view a real-time 3D video at different viewpoints. If a party is a common 2D video communication terminal, both parties can perform video communication in 2D mode when the terminal is controlled by an MCU because the 3D video communication condition cannot be met.

In the process of MVC communication, a multi-view 3D communication system works in the following display modes:

(1) In the single video image display mode, a user at the receiving end can select a viewpoint on the GUI interface or through a remote control of the command sending unit, and then the communication terminal sends the information of a viewpoint to the peer end through signaling. After receiving signaling, the collection control unit 611 at the peer end performs relevant operation in the camera and image processing unit 610, or selects the video streams at the corresponding viewpoint from the received video data and then encodes the selected video streams and finally transmits the video streams back to a display device at the receiving end. The video image seen by a user may be a 3D image, which includes the left and right images and is collected by two cameras in an MVC camera and image processing unit, or a 2D image.

(2) In the multiple video image display mode, a user at the receiving end can view the opposite scene at different viewpoints when the MVC camera and image processing unit at the transmitting end works, and multiple images are displayed in a system.

Note that each unit in a 3D video communication terminal provided in the embodiment 2 of the present invention can be integrated into a processing module. For example, the collection control unit 611, preprocessing unit 614, the matching/depth extraction unit 615, the video encoding/decoding unit 616, the multiplexing/demultiplexing unit 617, and the sending/receiving unit 618 are integrated into a processing module. Similarly, each unit in the 3D video communication terminal and each unit on an MVC device provided in other embodiments of the present invention can be integrated into a processing module. Or, any two or more units in each embodiment can be integrated into a processing module.

Note that each unit provided in an embodiment of the present invention can be implemented in the hardware format, and the software can be implemented in the format of a software functional module. Correspondingly, the telephony gateways provided in an embodiment of the present invention can be used as independent products, and the software can be stored in a PC readable storage medium for usage.

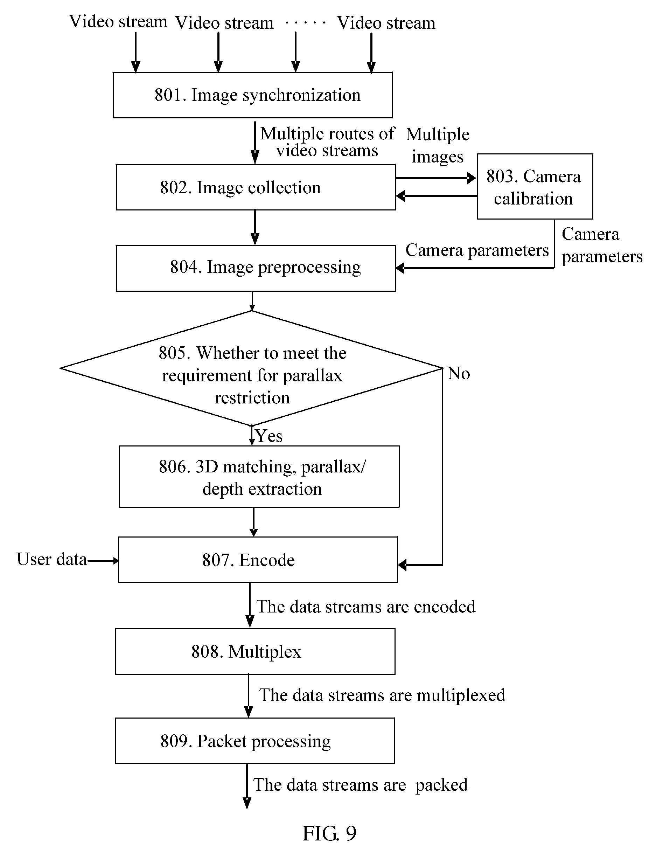

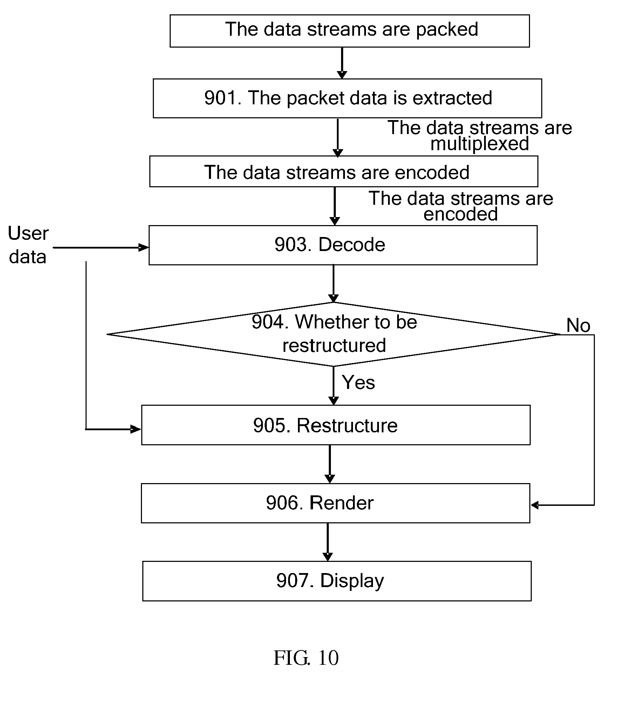

FIG. 9 and FIG. 10 show a 3D video communication method provided in an embodiment. A 3D video communication method is provided in the first embodiment of the present invention. FIG. 9 and FIG. 10 show the processes of the transmitter and receiver respectively. The process includes: performing bidirectional 3D video communication, including the processes of transmitting and receiving video data.

As shown in FIG. 9, the process of transmitting video data includes the following steps.

Step 802: Shooting is performed to acquire video data.

Step 806: The depth and/or parallax information of a shot object is acquired from video data.

Step 807: The video data and depth and/or parallax information are encoded.

Step 808: The encoded video data is multiplexed.

Step 809: The encoded data is encapsulated into a packet in compliance with a real-time transmission protocol, and then the packet is transmitted over a packet network.

In other embodiments, the process of shooting to acquire video data is replaced by the process of performing multi-view shooting to acquire MVC data.

Before the step 807 in which video streams are encoded is performed, the process includes:

Step 801: Synchronous processing of an image acquired in multi-view shooting mode is performed.

After the step 802 in which a synchronously shot image is collected is performed, the process includes:

Step 803: Camera calibration is performed for multiple collected images and camera parameters are returned for image collection and processing, that is, internal and external parameters of the camera are acquired, and the shooting operation is corrected on the basis of these parameters.
Step 804: The collected image is preprocessed.
Step 805: A judgment is made about whether a parallax restriction condition is met.
Step 806: When the parallax restriction condition is met, 3D matching is performed, the parallax/depth information is extracted, that is, the 3D information of a shot object is extracted, and then the video streams are encoded.
Step 807: When the parallax restriction condition is not met, the video streams are encoded directly.

In other embodiments, before the encapsulated data is transmitted, the process includes:

Step 808: The encoded video streams are multiplexed.

The process in which the bidirectional 3D video communication is performed also includes the step of transmitting a meeting initiation command with the capability information of the camera and image processing unit.

After the step 809 in which the packet is transmitted over a packet network is performed, the process further includes: judging whether both sides of a party have the 3D shooting and 3D display capabilities according to the received meeting initiation command and carried capability information; and establishing a meeting between communication terminals of both sides over a packet network to start up a camera and image processing unit and a receiving device of both sides when both sides have the 3D shooting and 3D display capabilities.

When one of both sides does not have the shooting capability, the process further includes: converting the video data of the transmitter into 2D video data and transmit the data to the receiver.

As shown in FIG. 10, the process of receiving video data includes:

Step 901: A video packet for real-time transmission is received over a packet network, and then the protocol header of the packet is removed to acquire the encoded 3D video coding data.
Step 903: The encoded video data is decoded to acquire video data and relevant depth and/or parallax information.
Step 905: The image at a user's viewing angle is restructured according to the depth and/or parallax information and video data.
Steps 906 and 907: The restructured image data is rendered onto a 3D display device.

In other embodiments, after the protocol header of the packet is removed and before the packet is decoded, the process further includes:

Step 902: A judgment is made about whether the packet includes multiplexed video data. If yes, the multiplexed packet is demultiplexed.

In other embodiments, before the step in which the data is rendered to a 3D display device is performed, the process further includes:

Step 904: A judgment is made about whether an image including the decoded data needs to be restructured.

When the image needs to be restructured, the process proceeds to the step 905, and the image is restructured; otherwise, the process proceeds to the steps 906 and 907, and the decoded data is rendered to a 3D display device.
In addition, after the encoded video data is decoded, the process further includes: judging whether a display device at the local end has 3D display capability; if no, the decoded 3D video data is converted to 2D video data and then transmitted to a panel display device.
To sum up, through a video communication terminal, system, and method, at least the following technical effect can be achieved in the present invention:
The remote bidirectional real-time communication of a 3D video is achieved in a live or entertainment scene. The bidirectional real-time multi-view 3D video communication is achieved in a scene of home communication or business meeting; network resources are used fully, and a user can watch a scene at multiple viewing angles in the process of MVC communication. The technology is completely different from an exiting technical video communication mode. In this circumstance, the user seems to be on the ground, thus improving the user's experience.
The common technicians in the field can understand and implement all or part procedures provided in the forgoing embodiments of the 3D video communication methods can be performed by a program through guiding related hardware. The procedures described can be stored in a computer readable storage medium. Therefore, when the program is implemented, it involves the contents of the 3D video communication methods provided in each implementation method of the present invention. The storage medium may be a ROM/RAM, magnetic disk, or compact disk.
Detailed above are a 3D video communication terminal, system, and method provided in the embodiments of the present invention. The method and spirit in the invention are described through forgoing embodiments. Those skilled in the art can make various modifications to specific embodiments and application scope of the invention in compliance with the spirit of the invention. The invention is intended to cover the modifications and variations provided that they fall in the scope of protection defined by the following claims or their equivalents.

**Claims**

1. A three dimensional, 3D, video communication terminal, comprising a transmitting device and a receiving device, wherein:

the transmitting device comprises:

a camera and image processing unit, configured to perform shooting and output video data and depth and/or parallax information;
an encoding unit, configured to encode the video data output by the camera and image processing unit and the depth and/or parallax information; and
a transmitting unit, configured to encapsulate the encoded data output by the encoding unit into a packet in compliance with a real-time transmission protocol, and transmit the

packet over a packet network in real time; and
the receiving device comprises:

a receiving unit, configured to receive the packet from the transmitting unit at a peer end, and remove a protocol header of the packet to acquire the encoded data;

a decoding unit, configured to decode the encoded data output by the receiving unit to acquire the video data and the depth and/or parallax information;

a restructuring unit, configured to restructure an image at a user's angle according to the depth and/or parallax information output by the decoding unit and the video data output by the decoding unit, and transmit the image into a rendering unit; and

the rendering unit, configured to render data of the restructured image output by the restructuring unit onto a 3D display device.

2. The 3D video communication terminal according to claim 1, wherein the camera and image processing unit is a unit supporting single-view, multi-view, or both the single-view and multi-view modes.

3. The terminal according to claim 1, further comprising:

communication terminals on both sides of the packet network, configured to perform communication and control the transmitting device and receiving device, and the terminals comprising:

a command sending unit, configured to send commands, including sending a meeting initiation command that carries capability information about the camera and image processing unit; and

a video operation unit, configured to operate the transmitting device and the receiving device, including turning on the transmitting device and the receiving device after receiving a meeting confirmation message.

4. The terminal according to claim 3, wherein the transmitting device further comprises:

a collection control unit, configured to follow the command to control operation of the camera and image processing unit, including following the command sent by the video operation unit to control the operation of the camera and image processing unit.

5. The terminal according to claim 1, wherein the command sending unit is further configured to transmit commands for controlling the transmitting device to the peer end.

6. The terminal according to claim 5, wherein the commands for controlling the transmitting device comprises:

commands for controlling a specific switch for a camera in the camera and image processing unit or a specific viewing angle for shooting.

7. The 3D video communication terminal according to claim 4, wherein the transmitting device further comprises:

a calibration unit, configured to acquire internal and external parameters of the camera in the camera and image processing unit, and transmit a command for calibrating the camera to the collection control unit.

8. The terminal according to claim 4, wherein the transmitting device further comprises:

a preprocessing unit, configured to receive the video data and relevant parameters of the camera output by the collection control unit, and preprocess the video data according to a preprocessing algorithm.

9. The 3D video communication terminal according to claim 4, wherein the transmitting device further comprises a synchronization unit, configured to:

generate synchronous signals and transmit the signals to the camera and image processing unit to control synchronous collection; or,

transmit the signals to the collection control unit and notify the collection control unit of controlling the camera and image processing unit to perform the synchronous collection.

10. The terminal according to claim 1, wherein:

the transmitting device further comprises a multiplexing unit, configured to multiplex the encoded data output by the encoding unit and transmit the data to the sending unit; and
the receiving device further comprises a demultiplexing unit, configured to demultiplex the multiplexed data output by the receiving unit and transmit the data to the decoding unit.

**11.** The terminal according to claim 1, wherein the camera and image processing unit is:

a 3D camera and image processing unit, configured to transmit the video data including the depth and/or parallax information; or
a camera and a matching/depth extraction unit which are separated, wherein the camera is configured to perform shooting and output the video data, and the matching/depth extraction unit is configured to acquire the depth and/or parallax information of a shot object from the video data output by the camera and transmit the information.

**12.** A three-dimensional, 3D, video communication system, comprising:

a 3D video communication terminal, configured to perform two-dimensional, 2D, or 3D video communication;
a 2D video communication terminal, configured to perform the 2D video communication; and
a packet network, configured to bear 2D or 3D video data transmitted between the 3D video communication terminals or the 2D video communication terminals.

**13.** The system according to claim 12, further comprising:

a multi-point control system, configured to control multi-point meeting connection between the 2D video communication terminals and/or the 3D video communication terminals, and comprising:

a capability judging unit, configured to judge whether both sides of a meeting have 3D shooting and 3D display capabilities according to capability information carried by a meeting initiation command when the command sent by the communication terminal is received; and
a meeting establishment unit, configured to establish a meeting connection between the communication terminals of the both sides of the meeting over the packet network when the capability judging unit determines that the both sides have the 3D shooting and 3D display capabilities.

**14.** The system according to claim 13, wherein the multi-point control system comprises:

a conversion unit, configured to convert data formats, including that the unit converts the video data received from one terminal into the 2D video data; and
a forwarding unit, configured to send the 2D video data output by the conversion unit to a peer end;
wherein, when the capability judging unit in the multi-point control system judges that one of the both sides of the meeting have no 3D display capability, the conversion unit starts working.

**15.** The system according to claim 12, wherein the packet network may be a wired packet network or wireless packet network.

**16.** The system according to claim 15, wherein the wired packet network may be: local area network, LAN; E1; narrowband integrated service digital network, ISDN; or, wideband ISDN.

**17.** The system according to claim 12, wherein the packet network comprises:

a gatekeeper, configured to provide address conversion and network access control of each unit on the packet network; and
a gateway, configured to achieve bidirectional communication in real time between both parties of the communication in the packet network or with another gateway.

**18.** A three-dimensional, 3D, video communication terminal, comprising:

a camera and image processing unit, configured to perform shooting and output video data and depth and/or parallax information;
an encoding unit, configured to encode the video data output by the camera and image processing unit and the depth and/or parallax information; and

a transmitting unit, configured to encapsulate the encoded data output by the encoding unit into a packet in compliance with a real-time transmission protocol and transmit the packet over a packet network in real time.

19. A three-dimensional, 3D, video communication terminal, comprising:

a receiving unit, configured to receive a packet from a transmitting unit and remove a protocol header of the packet to acquire encoded data;
a decoding unit, configured to decode the encoded data output by the receiving unit to acquire video data and depth and/or parallax information;
a restructuring unit, configured to restructure an image at a user's angle based on the depth and/or parallax information and the video data output by the decoding unit, and transmit the image into the rendering unit; and
a rendering unit, configured to render data of the restructured image output by the restructuring unit onto a 3D display device.

20. The terminal according to claim 19, further comprising:

a conversion unit, configured to convert 3D video data output by the decoding unit to two-dimensional, 2D, video data; and
a panel display device, configured to display the 2D video data output by the conversion unit.

21. A three-dimensional, 3D, video communication method for performing bidirectional 3D video communication, comprising:

performing shooting to acquire video data;
acquiring depth and/or parallax information of a shot object from the video data;
encoding the video data and the depth and/or parallax information;
encapsulating the encoded data into a packet in compliance with a real-time transmission protocol; and
sending the packet over a packet network.

22. The method according to claim 21, further comprising:

performing multi-view shooting to acquire multi-view coding, MVC, data.

23. The method according to claim 21, wherein:

the bidirectional 3D video communication further comprises: sending a meeting initiation command that carries capability information of a camera and image processing unit;
after sending the packet over the packet network, the method further comprises:

judging whether both sides of a party have 3D shooting and 3D display capabilities according to the received meeting initiation command and the carried capability information; and
establishing a meeting between communication terminals of the both sides over the packet network to start up the camera and image processing units and receiving devices of the both sides when a judgment is made about that both sides have the 3D shooting and the 3D display capabilities.

24. The method according to claim 21, wherein the shooting to acquire the video data comprises:

acquiring internal and external parameters of a camera, and correcting shooting operation according to the internal and external parameters.

25. A three-dimensional, 3D, video communication method, comprising:

receiving video data, comprising:

receiving a video packet in real-time transmission over a packet network, and then removing a protocol header of the packet to acquire encoded 3D video encoding data;
decoding the encoded video data to acquire video data and relevant depth and/or parallax information;
restructuring an image at a user's viewing angle according to the depth and/or parallax information and the video data; and
rendering data of the restructured image onto a 3D display device.

26. The according to claim 25, after decoding the encoded video data, further comprising:

judging whether a display device at a local end has 3D display capability; if no, the decoded 3D video data is converted to two-dimensional, 2D, video data and sent to a panel display device.

27. The according to claim 25, after removing the protocol header of the packet and before decoding the data, further comprising:

judging whether the packet includes multiplexed video data; if yes, the packet is demultiplexed.

28. The method according to claim 25, before rendering the data onto the 3D display device, further comprising:

judging whether an image including the decoded data needs to be restructured; and
restructuring the image that includes the decoded data when the image needs to be restructured.

FIG. 1

Single-view camera system    Parallel multi-view camera system    Convergence multi-view camera system

FIG. 2

**3D video communication terminal**

**Display system**
- 321. Receiving unit
- 322. Decoding unit
- 323. Restructuring unit
- 324. Rendering unit
- 325. 3D display device

**Transmitting device**
- 312. Camera and image processing unit
- 313. Encoding unit
- 314. Sending unit

**Packet network**

**Transmitting device**
- 321. Receiving unit
- 322. Decoding unit
- 323. Restructuring unit
- 324. Rendering unit
- 325. 3D display device

- 312. Camera and image processing unit
- 313. Encoding unit
- 314. Sending unit

FIG 3

FIG. 4

**532. Multi-point control unit**

**5320. Capability judging unit** → **5321. Meeting creation unit**

TO FIG. 5B

**530. Command sending unit**

TO FIG 5B

TO FIG. 5B

Transmitting end

Receiving device

**511. Collection control unit**

**512. Synchronization unit**

**510. Camera and image processing unit**

**514. Preprocessing unit**

**513. Calibration unit**

**515. Matching/depth extraction unit**

**518. Sending unit**

**516. Encoding unit**

**517. Multilexing unit**

Transmitting device

FIG. 5A

CONT. FROM FIG. 5A

CONT. FROM FIG. 5A

CONT. FROM FIG. 5A

533. Conversion unit

534. Forwarding unit

531. Video operation unit

Packet network

Transmitting device

Receiving end

526. Panel display device

525. Conversion unit

Receiving device

524. Rendering unit

520. Receiving unit

523. Restructuring unit

521. Demultiplexing unit

522. Decoding unit

FIG. 5B

FIG. 6

The left image is encoded in a traditional mode

Left and right images and parallax/depth information

Parallax/depth information

The right image is predicted by referring to the left image

The encoded data is transmitted /saved

The data in the left image is decoded

The parallax/depth information data is decoded

The residual data in the right image is decoded

A 3D image is displayed

The right image is synthesized

Encoding end

FIG. 7

Decoding end

FIG. 8

Video stream  Video stream  · · · · ·  Video stream

801. Image synchronization

Multiple routes of Multiple
video streams    images

802. Image collection → 803. Camera calibration

Camera parameters | Camera parameters

804. Image preprocessing

805. Whether to meet the requirement for parallax restriction

No

Yes

806. 3D matching, parallax/ depth extraction

User data → 807. Encode

The data streams are encoded

808. Multiplex

The data streams are multiplexed

809. Packet processing

The data streams are packed

FIG. 9

```
┌─────────────────────────────────────────┐
│      The data streams are packed         │
└─────────────────────────────────────────┘
                    │
                    ▼
┌─────────────────────────────────────────┐
│   901. The packet data is extracted      │
└─────────────────────────────────────────┘
                    │      The data streams are
                    │           multiplexed
                    ▼
┌─────────────────────────────────────────┐
│      The data streams are encoded        │
└─────────────────────────────────────────┘
                    │      The data streams are
                    │            encoded
  User              ▼
  data ────────►┌─────────────────────────────────────────┐
        │       │           903. Decode                    │
        │       └─────────────────────────────────────────┘
        │                    │
        │                    ▼
        │              ╱───────────────╲
        │            ╱  904. Whether to be ╲          No
        │           ◄     restructured      ►─────────┐
        │            ╲                     ╱           │
        │              ╲───────────────╱              │
        │                    │  Yes                    │
        │                    ▼                         │
        │       ┌─────────────────────────────────────────┐
        └──────►│         905. Restructure                 │
                └─────────────────────────────────────────┘
                            │                          │
                            ▼                          │
                ┌─────────────────────────────────────────┐
                │           906. Render                    │◄──┘
                └─────────────────────────────────────────┘
                            │
                            ▼
                ┌─────────────────────────────────────────┐
                │           907. Display                   │
                └─────────────────────────────────────────┘
```

FIG. 10

<div align="center">

# INTERNATIONAL SEARCH REPORT

</div>

| | International application No. |
|---|---|
| | PCT/CN2008/073310 |

**A. CLASSIFICATION OF SUBJECT MATTER**

<div align="center">

H04N 13/00 (2006.01)i

</div>

According to International Patent Classification (IPC) or to both national classification and IPC

**B. FIELDS SEARCHED**

Minimum documentation searched (classification system followed by classification symbols)

<div align="center">

IPC: H04N 13/00; H04N 7/-

</div>

Documentation searched other than minimum documentation to the extent that such documents are included in the fields searched

Electronic data base consulted during the international search (name of data base and, where practicable, search terms used)

WPI; EPODOC; PAJ: three dimensional, two dimensional, 3D, 2D, solid, video, communication, send, receive, terminal, interactive, network, transmit
CNPAT; CNKI:

**C. DOCUMENTS CONSIDERED TO BE RELEVANT**

| Category* | Citation of document, with indication, where appropriate, of the relevant passages | Relevant to claim No. |
|---|---|---|
| Y | JP2005-25388A (TOPPAN PRINTING CO LTD) 27 January 2005 (27.01.2005) description segment 0027- segment 0032, figure 1 | 12, 15-17 |
| Y | CN101013507A (NEC CORP) 08 August 2007 (08.08.2007) description page14, line11-line19, figure 16 | 12, 15-17 |
| A | CN1275871A (UNIV QINGHUA) 06 December 2000 (06.12.2000) the whole document | 1-28 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 March 2009 (02.03.2009) | **12 Mar. 2009 (12.03.2009)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>**WU Shuang**<br><br>Telephone No. (86-10)62411507 |

Form PCT/ISA/210 (second sheet) (April 2007)

**INTERNATIONAL SEARCH REPORT**
Information on patent family members

International application No.

PCT/CN2008/073310

| Patent Documents referred in the Report | Publication Date | Patent Family | Publication Date |
|---|---|---|---|
| JP2005-25388A | 27.01.2005 | None | |
| CN101013507A | 08.08.2007 | US2007195082A1 | 23.08.2007 |
| | | JP2007200227A | 09.08.2007 |
| CN1275871A | 06.12.2000 | CN1134175C | 07.01.2004 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200710187586